# EUROPEAN PATENT SPECIFICATION

(11) **EP 3 221 650 B1**
(45) Date of publication and mention of the grant of the patent: **06.02.2019**
(21) Application number: 15800897.9
(22) Date of filing: 17.11.2015
(51) Int. Cl.: F24S 30/42, F24S 23/74, F24S 23/79, F24S 30/452, F24S 30/45, F24S 23/75

(54) **SOLAR CONCENTRATOR WITH SPACED PIVOTABLE CONNECTIONS**
SONNENKONZENTRATOR MIT BEABSTANDETEN SCHWENKBAREN VERBINDUNGEN
CONCENTRATEUR SOLAIRE AYANT DES RACCORDEMENTS PIVOTANTS ESPACÉS

(30) Priority: 18.11.2014 GB 201420462
(43) Date of publication of application: 27.09.2017
(73) Proprietor: Oxford University Innovation Limited, Botley Oxford OX2 0JB (GB)
(72) Inventor: BAILEY, Paul Brian, Oxford Oxfordshire OX33 1NT (GB); STONE, Charles Richard, Oxford Oxfordshire OX2 8DY (GB); JELLEY, Nicholas Alfred, Oxford Oxfordshire OX2 6RX (GB); DADD, Michael William, Oxford Oxfordshire OX4 3NX (GB)
(74) Representative: J A Kemp
(86) International application number: PCT/GB2015/053485
(87) International publication number: WO 2016/079497

(56) References cited:
- WO-A2-2011/154685
- BE-A- 897 996
- DE-A1- 2 643 539
- DE-A1-102006 028 446
- US-A- 4 291 677
- US-A1- 2013 092 154

## Description

This invention relates to a solar concentrator, particularly to a solar concentrator with two axis tracking and intended for use in medium power applications, such as in the range of 1 to 100 kW.

Renewable energy sources will become increasingly important as the world is forced to become less dependent on fossil fuels. Solar energy is generally regarded as the most significant renewable energy resource for many parts of the world and in particular for those countries that have high solar insolation, e.g. India.

Solar energy is already used directly to generate electrical power by means of flat PV panels.

Solar energy can also be used to provide a heat source for a range of applications and in a number of these applications there appear to be very tangible economic benefits. Examples are: heat input for absorption cycle chillers; steam generation for industrial processes and heat for cooking food. The temperatures required vary but are typically 150 to 400 deg C or higher.

For heat to be generated at the required temperatures it is generally necessary for a solar collector to concentrate solar radiation. For lower temperatures (e.g. 150 deg C) concentration factors of about 100 may suffice and these can be produced by concentrators that use single axis tracking only. For temperatures of 400 deg C and more, higher concentrations are required and these can only be provided by concentrators that use two axis tracking.

Existing two axis tracking solar concentrators typically use a reflective dish arrangement. Ideally the dish is a parabola but successful dishes have also used designs that approximate the parabolic geometry in various ways. Page 9 in OMSoP Report: D3.4 REPORT ON STATE-OF-THE-ART DISH-ENGINE APPLICATIONS (European Union's 7th Framework Programme for Research and Development) shows a number of such designs that have been used to provide heat inputs to Stirling engines.

While these designs are capable of producing the levels of concentration required for high temperature applications, they suffer from two significant drawbacks.

Firstly the focus of the concentrator, where the heat is generated, is in a fixed position relative to the concentrator and some distance from it. As the concentrator tracks the Sun, the focus and the heat receiver are also required to move with the concentrator. The tracking/concentrator structure must therefore be able to support a relatively massive assembly out on a boom. For process heat applications there is also the very significant complication of providing articulating joints for the input and output of the process fluids (e.g. water and steam under high pressure).

Secondly these designs have, in different ways, geometries that are relatively complicated to implement. The parabolic dishes require a 3D surface that cannot be formed from flat sheet; it needs to be machined or moulded. If the parabola is approximated then a significant number of elements are required together with appropriate supports.

An alternative approach to dish concentrators that is capable of generating a fixed focus uses a large number of individually tracked mirrors to form a common focus on a target that is mounted on a tower. These "Heliostats" have been developed for large scale power generation but they are generally not suited to applications at lower powers, such as in the 1 to 100 kW range.

WO 2011/154685 A2 discloses a focussing system for concentrating radiation onto a target surface, comprising: a first reflective element forming part of the surface of a cone axially aligned along a first alignment axis, the first reflective element being positioned such that when planar radiation is incident on the first reflective element in a direction parallel to the first alignment axis, the planar radiation is focussed towards a first focus lying along the first alignment axis, wherein said part of the surface of a cone is contained within a sector having an included angle of less than 180 degrees; and a second reflective element having a reflective surface that at all points is flat in a direction parallel to a single reference direction, the second reflective element being positioned between the first reflective element and the first focus such that, when planar radiation is incident on the first reflective element in a direction parallel to the first alignment axis, radiation reflected from the first reflective element onto the second reflective element is focussed towards a second focus.

US 2013/093154 A1 discloses a solar collector system that comprises an absorber tube, a primary reflector, and a secondary reflector. In certain embodiments, the primary and secondary reflectors are positioned on opposing sides of the absorber tube, such that their respective focal points converge upon a longitudinal axis of the absorber tube. The solar collector system includes in certain embodiments a frame assembly, whereby the primary reflector, the secondary reflector, and the absorber tube are all configured to unitarily rotate about a common pivot axis defined by at least a portion of the frame assembly.

US 4291677 A discloses a solar energy collector comprising a parabola shaped mirror formed from a plurality of flexible reflective film strips stretched over a plurality of supports being arranged to position the film in a parabola shape. The supports are held in place by a plurality of trusses. The mirror is pivotally secured to a support assembly whereby the mirror can be maintained at the same relative position to the sun. Positioning of the mirror is controlled by an energy rays tracking device. The supports are adjustable such that light and infrared energy rays striking the film between the supports are reflected to the focus of the mirror around which a collector assembly is located. The collector assembly comprises a surface coated with a black substance which is capable of maximum heat absorption from the light and infrared energy rays; and, a contained fluid passing in contact with said surface absorbs and transfers the heat in order that useful work can be obtained therefrom.

It is an object of the invention to provide an improved solar concentrator which at least partially addresses one or more of the problems with the prior art discussed above.

The scope of the invention is defined in the appended claims.

In a disclosed embodiment there is provided a solar concentrator, comprising: a reflector assembly comprising first and second reflectors fixedly mounted relative to each other, the first and second reflectors being configured such that solar radiation incident on the first reflector from a target direction is focussed to a point focus via a first sequence of reflections, the first sequence of reflections including a reflection from the first reflector onto the second reflector and a subsequent reflection from the second reflector onto the point focus; and a first tracking assembly comprising first and second connectors supporting the reflector assembly, wherein the first and second connectors are configured to allow rotation of the reflector assembly about a first axis via pivoting of the reflector assembly at the first and second connectors; and the first and second connectors are both located on the first axis and are spaced apart from each other along the first axis.

Forming a point focus using two separate reflectors makes it possible for the reflectors to be formed from flat sheet, thereby facilitating transport and storage of components for manufacturing the solar concentrator. The pivotable mounting of the reflector assembly using two connectors that are spaced apart from each other makes it possible to support the reflector assembly in a stable and secure manner without the connectors needing to be excessively strong (and therefore heavy and/or expensive). The combination of features provides a system that can track the Sun through the sky effectively, thereby allowing high concentration factors to be achieved, and which is lightweight and easy to store and assemble, even in remote locations.

The first and second reflectors may easily be configured to give high concentration factors e.g. 500 to 1000 or more. Such concentration factors make the solar concentrator suitable for applications where the device will provide outputs in the range 1 to 100+ kW. Typical applications are community solar cookers, process heating and also solar power generation units that might exploit Stirling cycle or Organic Rankine cycle engines.

The reflector assembly further comprises a second tracking assembly, wherein the first tracking assembly is connected to the second tracking assembly in such a way as to be rotatable about a second axis that is perpendicular to the first axis. Thus, the reflector assembly can be rotated about perpendicular first and second axes, thereby allowing the reflector assembly to follow the path of the Sun across the sky with high precision.

The solar concentrator is configured such that the point focus remains stationary (e.g. relative to the ground) while the reflector assembly is rotated through a range of angles about both the first and second axes. For example, the solar concentrator may be configured such that the point focus remains stationary throughout a tracking of the Sun through the sky during the course of a day. The use of two separate reflectors arranged according to embodiments of the invention make it possible to achieve this functionality with a minimum of movement of reflective parts during the tracking. The overall apparatus can therefore be constructed and operated cheaply and compactly.

The provision of a point focus that is fixed with respect to the ground is a very significant advantage over existing dish concentrators as it eliminates the need to move apparatus for receiving the concentrated solar energy (the heat receiver) in response to tracking of the Sun. The heat receiver can be mounted on a simple static tower with no requirement for any articulating joints for the input and output of process fluids (where these are used). Moreover, the heat receiver need not shield the mirror collecting the solar radiation.

In an embodiment, the solar concentrator is configured such that, in use, when viewed along the target direction, the second connector is positioned in between the first and second reflectors along the first axis. Providing the second connector in between the first and second reflectors in this manner provides effective support for the reflector assembly while also freeing up space in the region of the point focus, thereby facilitating installation of the heat receiver and associated apparatus at the point focus.

In an embodiment, the solar concentrator is configured such that when solar radiation is incident on the first reflector from the target direction the point focus is located nearer to the Sun than the second reflector from which solar radiation is being reflected towards the point focus (e.g. the second reflector is below the point focus). Additionally, in this embodiment, the reflector assembly further comprises third and fourth reflectors fixedly mounted relative to each other, the third and fourth reflectors being configured such that solar radiation incident on the third reflector from the target direction is focussed to the point focus via reflection from the fourth reflector, and the solar concentrator is configured such that when solar radiation is incident on the third reflector from the target direction the point focus is located further from the Sun than the fourth reflector from which solar radiation is being reflected towards the point focus (e.g. the fourth reflector is above the point focus).

This arrangement provides a higher power per ground area required for installation (footprint) than alternative embodiments which do not have the third and fourth reflectors. Furthermore, the positioning of the third and fourth reflectors described provides a more balanced distribution of mass around the first axis, thereby facilitating stability and use of lightweight and cheap construction components.

The invention can be used in any application that involves utilising concentrated radiation from the Sun. Examples are:
1) Direct absorption of solar radiation:
   a) Concentrated Photo Voltaic systems to produce electrical power
   b) Chemical synthesis systems where the solar radiation is used to facilitate chemical reactions
2) Use of heat generated by solar radiation:
   a) Heat input for thermodynamic cycles
   b) Engines for production of power e.g. Stirling cycle, Organic Rankine cycle
   c) Absorption cycle chillers for refrigeration
   d) Input for process heating
   e) Cooking.

The invention will now be further described, merely by way of example, with reference to the accompanying drawings, in which:
Figure 1 is a side sectional view of a reflector assembly comprising first and second reflectors according to an embodiment, with a point focus that is above the second reflector;
Figure 2 is a plan view of the reflector assembly according to Figure 1;
Figure 3 is a side sectional view of a reflector assembly of the type shown in Figure 1 except that the point focus is formed below the second reflector;
Figure 4 is a side sectional view of a reflector assembly of the type shown in Figure 1, except that a second connector is provided in between the first and second reflectors;
Figure 5 is a side sectional view of an embodiment further comprising third and fourth reflectors, with the point focus being formed in between the second and fourth reflectors;
Figure 6 is a side sectional view of a first example of a second tracking assembly, supporting a first tracking assembly connected to a reflector assembly of the type shown in Figure 1 in a first example position (latitude = 0 degrees);
Figure 7 is a side sectional view of the arrangement of Figure 6 with the reflector assembly in a second example position (latitude = 40 degrees);
Figure 8 is a plan view of the arrangement of Figure 6;
Figure 9 is a side sectional view of a second example of a second tracking assembly, supporting a first tracking assembly connected to a reflector assembly of the type shown in Figure 3 in a first example position (latitude = 0 degrees);
Figure 10 is a side sectional view of the arrangement of Figure 9 with the reflector assembly in a second example position (latitude = 40 degrees);
Figure 11 is a side sectional view of a third example of a second tracking assembly, supporting a first tracking assembly connected to a reflector assembly of the type shown in Figure 4 in a first example position (latitude = 0 degrees);
Figure 12 is a side sectional view of the arrangement of Figure 11 with the reflector assembly in a second example position (latitude = 40 degrees);
Figure 13 is a side sectional view of a fourth example of a second tracking assembly, in which the second axis is vertical, and supporting a first tracking assembly connected to a reflector assembly of the type shown in Figure 1;
Figure 14 is a plan view of the arrangement of Figure 13 positioned at a low elevation (suitable for dawn for example);
Figure 15 is a plan view of the arrangement of Figure 13 positioned at a maximum elevation (suitable for midday);
Figure 16 is a plan view of the arrangement of Figure 13 positioned at a low elevation (suitable for dusk for example);
Figure 17 is a view along a horizontal direction perpendicular to the second axis of a fifth example of a second tracking assembly, in which the second axis is horizontal and oriented N-S;
Figure 18 is a sectional view along the second axis of the arrangement of Figure 18 at a low elevation (suitable for dawn for example);
Figure 19 is a sectional view along the second axis of the arrangement of Figure 18 at a maximum elevation (suitable for midday); and
Figure 20 is a sectional view along the second axis of the arrangement of Figure 18 at a low elevation (suitable for dusk for example).

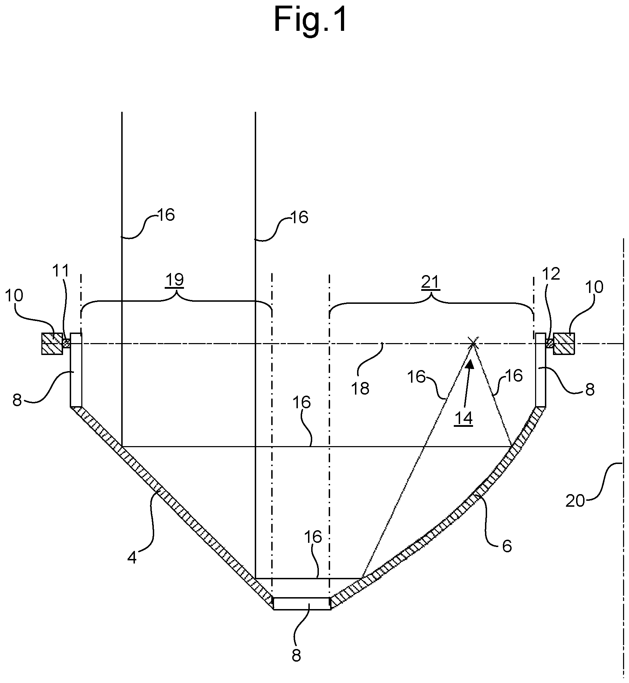

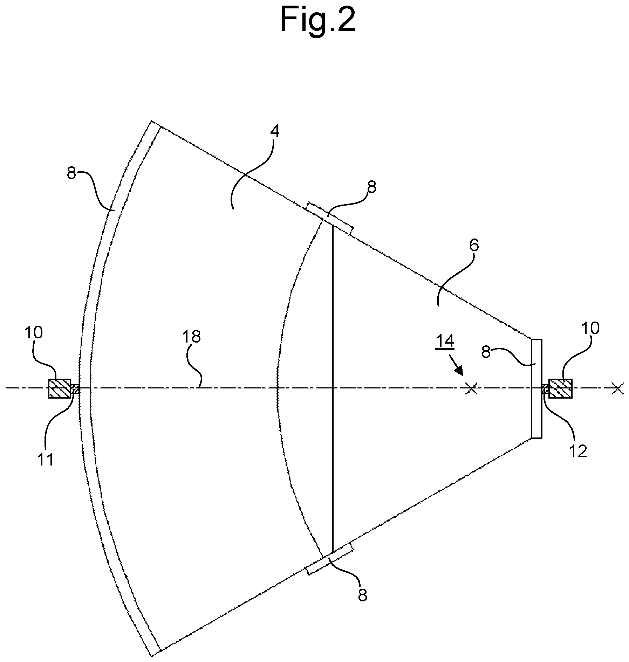

Examples of a solar concentrator (or components thereof) according to embodiments are shown in Figures 1-20. In these embodiments the solar concentrator comprises a reflector assembly. The reflector assembly comprises a first reflector 4 and a second reflector 6. The first and second reflectors 4,6 are typically separate from each other and have different geometries to each other (e.g. as described below, the first reflector 4 may have a conical geometry and the second reflector may have a two-dimensional parabolic geometry). The first and second reflectors 4,6 are configured such that solar radiation (see example rays 16 in Figure 1 for example) incident on the first reflector 4 from a target direction is focussed to a point focus 14. The point focus 14 is a focus that is substantially localised in space. The point focus 14 will not be perfectly point-like (i.e. having zero dimensions) due to engineering tolerances with which the skilled person would be well aware. Typically, the area of the point focus 14 in all planes cutting through the point focus 14 will be significantly less than the surface area of both of the first and second reflectors 4,6, preferably at least 100 times smaller than the surface area of the first reflector 4.

The focussing is achieved by a first sequence of reflections. The first sequence of reflections includes a reflection from the first reflector 4 onto the second reflector 6 and a subsequent reflection from the second reflector 6 onto the point focus 14. Forming a point focus 14 using two different reflectors rather than one makes it possible for the reflectors to have geometries which can be formed by bending flat sheets, thereby facilitated manufacture and transport of the apparatus or components for building the apparatus.

The first and second reflectors 4,6 are fixedly mounted relative to each other (e.g. so that the first and second reflectors 4,6 maintain a fixed spatial relationship relative to each other during use). In the embodiments shown in the figures, connector elements 8 are provided for connecting the first and second reflectors 4,6 to each other. The connector elements 8 may be connected to each other to form a reflector assembly frame to which the first and second reflectors 4,6 can be attached. The reflector assembly may thus comprise the first and second reflectors 4,6, the connector elements 8 and/or the reflector assembly frame.

The solar concentrator may further comprise a first tracking assembly comprising first and second connectors 11 and 12 supporting the reflector assembly. In certain embodiments the first tracking assembly may comprise a first tracking assembly frame 10 to which the first and second connections 11 and 12 are attached. The first and second connectors 11 and 12 are configured to allow rotation of the reflector assembly about a first axis 18. The rotation is provided via pivoting of the reflector assembly at the first and second connectors 11 and 12. Various mechanisms for implementing the pivotable functionality at the connectors 11 and 12 would be known to the skilled person. The first and second connectors 11,12 are both located on the first axis 18 and are spaced apart from each other along the first axis 18. Providing two connectors 11,12 makes it possible to support the reflector assembly in a stable and secure manner without the connectors 11,12 needing to be excessively strong (and therefore heavy and/or expensive). The rotation about the first axis 18 (optionally in combination with rotation about a second axis, as described below) makes it possible for the reflector assembly to follow the Sun as it moves through the sky during the day.

In an embodiment, the reflector assembly is configured such that the point focus 14 remains stationary (e.g. relative to the environment in which the solar concentrator is installed) through a range of angles of rotation of the reflector assembly about the first axis 18. Maintaining a stationary point focus 14 makes it easier to use the solar energy concentrated at the point focus 14. For example a heat receiver which absorbs the solar energy can remain stationary during use despite rotation of the reflector assembly to follow movement of the Sun.

In an embodiment, the first reflector 4 is configured such that solar radiation is reflected off the first reflector 4 in a direction perpendicular to the target direction when the solar radiation is incident on the first reflector 4 from the target direction (i.e. the rays travelling between the first reflector 4 and the second reflector 6 are contained in planes that are perpendicular to the incident radiation from the Sun). In an embodiment, the first reflector 4 comprises a reflective surface shaped as a portion of a cone. For example, the first reflector 4 may comprise a reflective surface in the form of a sector of a truncated cone. In an embodiment, the second reflector 6 comprises a reflective surface shaped as a portion of a parabolic trough. The parabolic trough may be referred to as a two-dimensional parabolic surface in the sense that a section through the surface follows a parabolic curve when cut by any plane perpendicular to a first direction and follows a straight line when cut by any plane that contains the first direction. Thus, in Figure 1 for example it can be seen that the second reflector 6 has a parabolic section when viewed along a direction perpendicular to the page. Sections viewed from any direction within the page would be straight.

In an embodiment the cone of the first reflector 4 is defined by a cone axis 20 about which the cone is rotationally symmetric. The first reflector 4 is arranged so that the first axis 18 intersects the cone axis 20 at 90 degrees (see Figure 1 for example). The second reflector 6 may be positioned in between the first reflector 4 and the cone axis 20 (in order to intercept solar radiation reflected from the first reflector 4). The target direction for radiation incident on the first reflector 4 may be parallel to the cone axis 20.

The detailed geometry of the concentrator surfaces can be determined using principles known by persons skilled in the art. See for example "Low Cost Focussing System Giving High Concentrations" US-2013-0206207-A1.

In an embodiment the first axis 18 intersects the point focus 14. This facilitates maintaining the point focus 14 stationary during tracking of the movement of the Sun by the solar concentrator.

In an embodiment, the solar concentrator is configured such that when solar radiation is incident on the first reflector 4 from the target direction the point focus 14 is located nearer to the Sun than at least most of a portion of the second reflector 6 from which solar radiation is being reflected towards the point focus 14. In embodiments of this type the point focus will tend to be above at least part of the second reflector 6. Examples of embodiments of this type are shown in Figures 1, 2, 4-8 and 11-20.

The second reflector 6 may be configured so that rays incident on the point focus are equally distributed about an axis through the point focus 14 that is parallel with the target direction (and, where applicable, the cone axis 20).

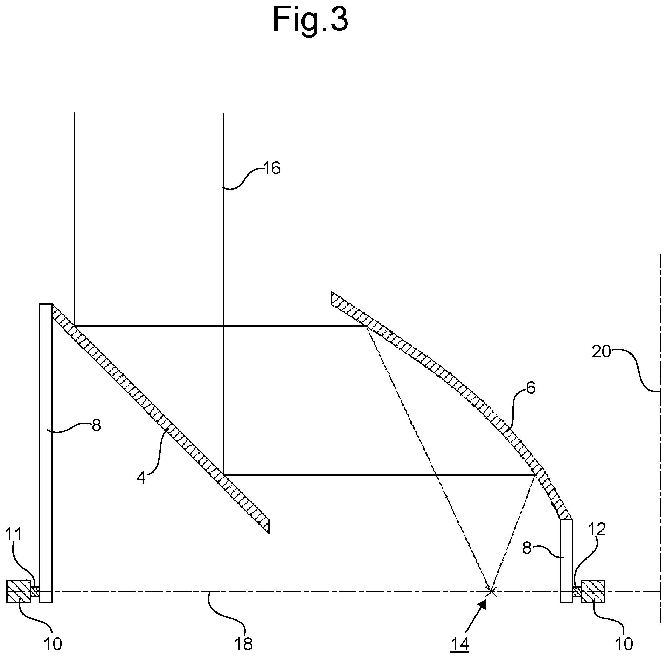

In an alternative embodiment, the solar concentrator is configured such that when solar radiation is incident on the first reflector 4 from the target direction the point focus 14 is located further from the Sun than at least most of a portion of the second reflector 6 from which solar radiation is being reflected towards the point focus 14. Examples of embodiments of this type are shown in Figures 3, 9 and 10. In embodiments of this type the first axis 18 may be located below the first and second reflectors 4,6, rather than above the first and second reflectors 4,6 as in Figures 1, 2, 4-8 and 11-20. In embodiments of this type the point focus 14 will tend to be below the second reflector 6. This geometry may be advantageous in applications where it is desirable to minimise the height of the solar concentrator.

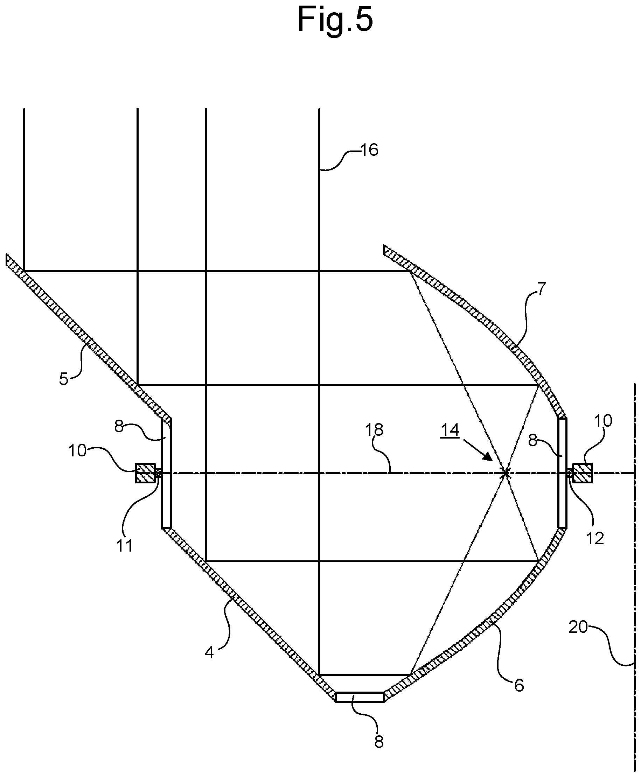

In an embodiment, the reflector assembly further comprises a third reflector 5 and a fourth reflector 7. An example of such an embodiment is shown in Figure 5. The third and fourth reflectors 5,7 are fixedly mounted relative to each other (e.g. so that the third and fourth reflectors 5,7 maintain a fixed spatial relationship relative to each other during use). Connector elements 8 may be provided for connecting the third and fourth reflectors 5,7 to each other and/or to the first and second reflectors 4,6 and/or to a reflector assembly frame (where this is provided). The reflector assembly may thus comprise the first, second, third and fourth reflectors 4,5,6,7, the connector elements 8 and/or the reflector assembly frame.

In an embodiment, as for the first reflector 4, the third reflector 5 is configured such that solar radiation is reflected off the third reflector 5 in a direction perpendicular to the target direction when the solar radiation is incident on the third reflector 5 from the target direction (i.e. the rays travelling between the third reflector 5 and the second reflector 7 are contained in planes that are perpendicular to the incident radiation from the Sun). In an embodiment, as for the first reflector 4, the third reflector 5 comprises a reflective surface shaped as a portion of a cone. For example, the third reflector 5 may comprise a reflective surface in the form of a sector of a truncated cone. In an embodiment, as for the second reflector 6, the fourth reflector 7 comprises a reflective surface shaped as a portion of a parabolic trough.

The first, second, third and fourth reflectors 4,5,6,7 may be configured such that when solar radiation is incident on the first and third reflectors 4,5 from the target direction the point focus 14 is located nearer to the Sun than at least most of a portion of the second reflector 6 from which solar radiation is being reflected towards the point focus 14 and further from the Sun than at least most of a portion of the fourth reflector 7 from which solar radiation is being reflected towards the point focus 14 (as shown in Figure 5 for example).

The arrangement of Figure 5 resembles a stacking or "double decker" combination of embodiments of the type shown in Figures 1 and 3. If the arrangements of Figures 1 and 3 were directly combined simply by bringing together their first axes 18, the first reflector 4 of the lower arrangement (of the type shown in Figure 1) would be obscured by the first reflector 4 of the upper arrangement (which becomes the "third reflector 5"). This is remedied by expanding the third reflector 5 radially outwards relative to the cone axis 20 until the inner radius of the third reflector 5 coincides with the outer radius of the first reflector 4 (as shown in the example of Figure 5). Embodiments of this type have some significant advantages:
i) They are more space efficient than arrangements using only two reflectors. The ground area required for installation (the footprint) is smaller for a given power.
ii) The same first tracking assembly as may be used for a reflective assembly having only two reflectors can be used whilst generating more than twice the power.
iii) The combination of two reflector assemblies having two reflectors only, above and below the first axis 18, leads to an assembly that is already fairly well balanced and that can have a very even weight distribution by choosing suitable sector angles for the conical first and third reflectors 4,5. This contrasts strongly with the other embodiments (e.g. Figures 1 and 3) where the weight is all on one side of the first axis 18.

To avoid or reduce convective losses, windows may be provided on the receiver. Windows allow radiation in but do not allow convection out - good for radiation from above.

In an embodiment, the solar concentrator is configured such that, in use, when viewed along the target direction, the first reflector 4 and the second reflector 6 are positioned in between the first and second connectors 11,12 along the first axis 18. For example, in an embodiment projections onto the first axis 18 in directions perpendicular to the first axis 18 of all portions of the first and second reflectors 4,6 that are participating in reflections leading to the focussing of the solar radiation to the point focus 14 are all positioned in between the first and second connectors 11,12. Figure 1 shows an embodiment of this type. Projections onto the first axis 18 of portions of the first reflector 4 that are participating in reflections leading to the focussing of the solar radiation to the point focus 14 would be located on the first axis 18 in the region marked 19 in Figure 1. Projections onto the first axis 18 of portions of the second reflector 6 that are participating in reflections leading to the focussing of the solar radiation to the point focus 14 would be located on the first axis 18 in the region marked 21. As can be seen all of regions 19 and 21 on the first axis 18 are located in between the positions on the first axis 18 of the first and second connectors 11 and 12.

Positioning the first and second connectors 11,12 relatively far apart in this manner tends to reduce the forces that need to be withstood by either of the first and second connectors 11,12 to counter rotational forces (torques) applied to the reflector assembly (e.g. by gravity), with minimal need to add balancing weights and thereby increase the overall weight of the apparatus. Furthermore, providing the first and second connectors 11,12 outside of the region where the reflections between the first and second reflectors 4,6 and the point focus 14 are taking place reduces the risk, or extent, of blocking of reflected rays by either of the first and second connectors 11,12 and/or by any supporting structures supporting the first and second connectors 11,12, which may arise in other arrangements.

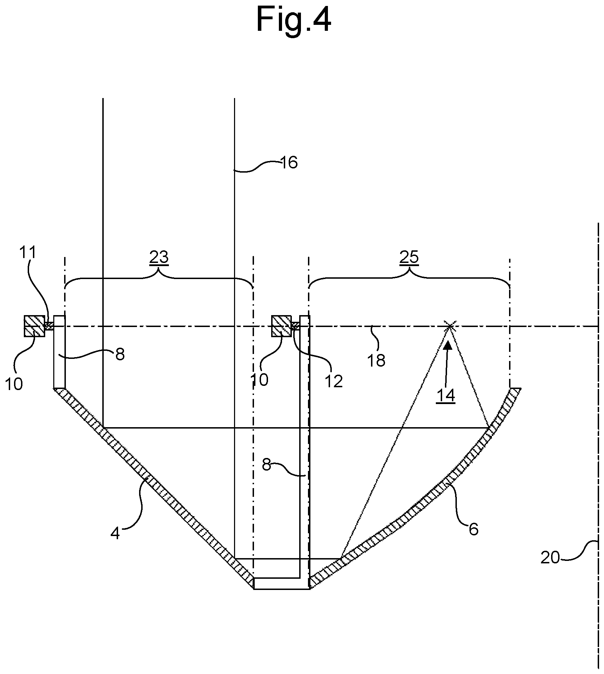

In an alternative embodiment, as depicted for example in Figure 4, the solar concentrator is configured such that, in use, when viewed along the target direction, the second connector 12 is positioned in between the first and second reflectors 4, 6 along the first axis 18. For example, in an embodiment the second connector 12 is positioned in between projections (in directions perpendicular to the first axis 18) onto the first axis 18 of all portions of the first reflector 4 that are participating in reflections leading to the focussing of the solar radiation to the point focus 14 (within region 23 in Figure 4) and projections onto the first axis 18 of all portions of the second reflector 6 that are participating in reflections leading to the focussing of the solar radiation to the point focus 14 (within region 25 in Figure 4). This configuration frees up space around the point focus 14, thereby facilitating the positioning of apparatus, such as a heat receiver, which uses the solar energy focussed at the point focus 14.

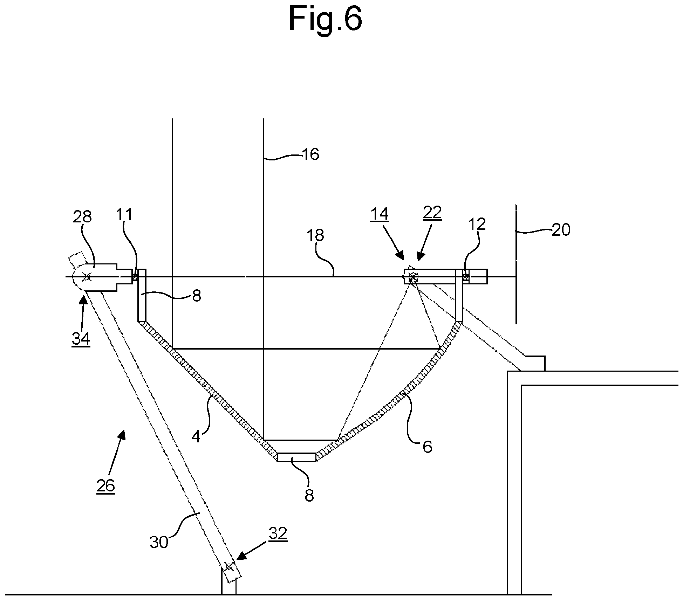

In an embodiment, the solar concentrator further comprises a second tracking assembly, wherein the first tracking assembly is connected to the second tracking assembly in such a way as to be rotatable about a second axis 22. The second axis 22 may be arranged to pass through the point focus 14. Examples of second tracking assemblies are described below with reference to Figures 6-20.

In various embodiments the first and second tracking assemblies are configured so that the first and second axes 18,22 remain perpendicular to each other during rotation of the reflector assembly about the first axis 18 and rotation of the first tracking assembly (and therefore the reflector assembly mounted therein) about the second axis 22. The first and second tracking assemblies may be further configured such that the first and second axes 18,22 pass through the point focus 14. This provides the first and second tracking assemblies with the necessary degrees of freedom efficiently to follow any trajectory of the Sun across the sky while maintaining a point focus 14 that is stationary in the reference frame of the environment within which the solar concentrator is installed.

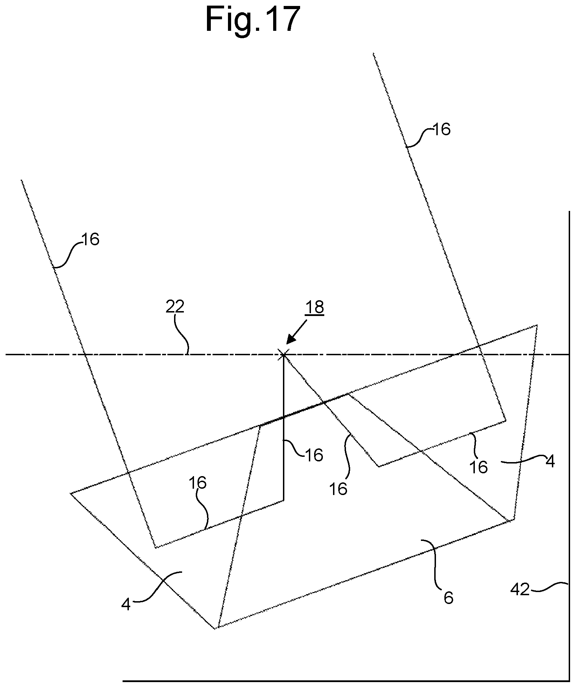

In an embodiment, the second tracking assembly is configured to support the first tracking assembly in such a manner that the second axis 22 is horizontal. Figures 6-12 and 17-20 show embodiments of this type. As will be described in further detail below, Figures 6-12 show embodiments in which the horizontal second axis 22 is positioned so as to be parallel to lines of latitude of the Earth (i.e. aligned with the local East-West direction). Figures 17-20 show an embodiment in which the horizontal second axis 22 is positioned so as to be parallel to lines of longitude of the Earth (i.e. aligned with the local North-South direction).

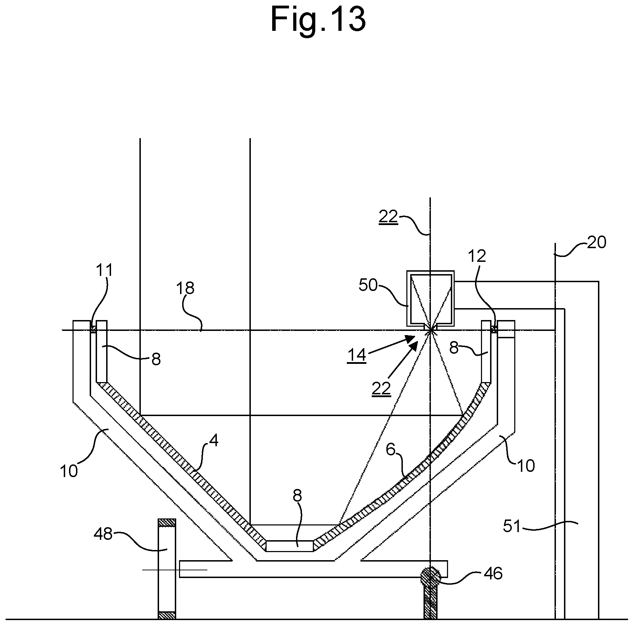

In an alternative embodiment, the second tracking assembly is configured to support the first tracking assembly in such a manner that the second axis 22 is vertical. Figures 13-16 show an example embodiment of this type.

### Second Tracking Assembly - First Example

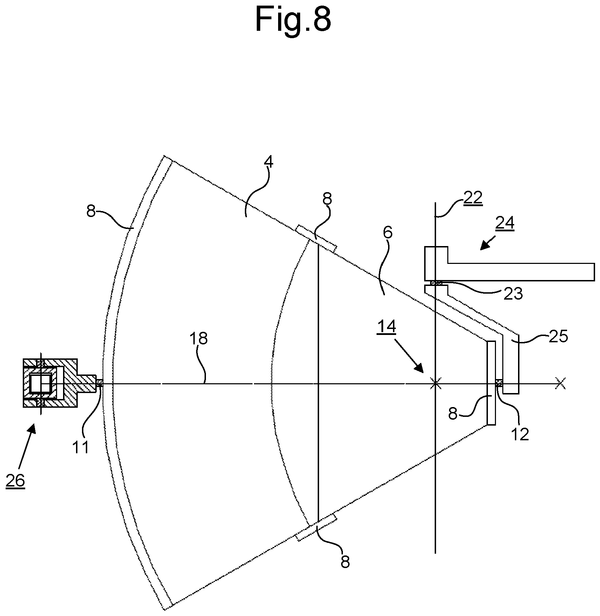

In a first example of a second tracking assembly, as shown in Figures 6-8, the second axis 22 is defined by a gimbal 24 (see top view of Figure 8 for clearest depiction). The gimbal 24 is connected to one of the first and second connectors (the second connector 12 in the example shown). The second tracking assembly further comprises a support assembly 26 connected to the other of the first and second connectors (the first connector 11 in the example shown). The gimbal 24 is configured to provide the required rotation about the second axis 22. The support assembly 26 comprises a carrier 28 mounted so as to be linearly translatable along a linear track 30. The linear track 30 is configured to pivot about an axis 32 parallel to the second axis 22. The other of the first and second connectors 11 is pivotably connected to the carrier 28 such as to allow rotation about an axis 34 through the carrier 28 that is parallel to the second axis 22.

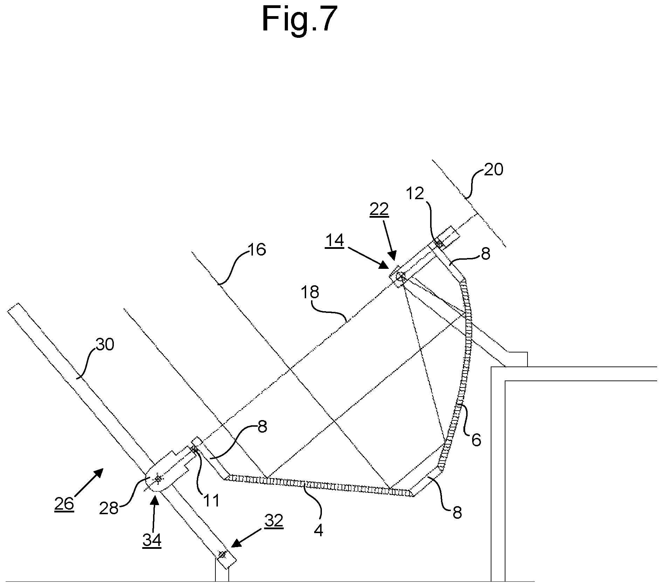

The combined movement of the pivoting linear track 30 and the linear movement of the carrier 28 along the linear track 30 allows the first tracking assembly to be freely rotated about the gimbal 24 whilst providing both control and support. In Figure 6 the second axis 22 is adjusted for the Sun directly overhead (a latitude of 0 deg). The second axis tracking movement is illustrated in Figure 7 where the first tracking assembly has been rotated about the second axis 22 for a latitude of 40 deg. Figure 8 shows a plan view of Figure 6. It is seen that the gimbal 24 is only supported on one side - i.e. cantilevered from a single pivot 23 via cantilever arm 25. The use of such a cantilevered gimbal 24 improves access to the heated area in the region of the point focus 14.

This embodiment has a simple low cost design that is suited for smaller applications. In particular it can be used for community sized solar cooking. The height of the focus off the ground may be ∼ 3 m so the cooking facility will typically need to be on the first floor or on the roof.

Features of the embodiment described above with reference to Figures 6-8 may be summarised as follows:
i) Polar tracking - second axis 22 follows the Sun's path in the sky - this axis needs to be adjusted only slowly as the height of the Sun's path changes during a year.
ii) Second axis 22 runs parallel to ground (East-West).
iii) Rotation about the second axis 22 is provided using a pivot/gimbal arrangement.
iv) A support assembly is provided to give additional support and to control rotation about second axis.
v) Second reflector 6 is orientated to reflect upwards, as in Figure 1.
vi) Figure 6 shows position of second axis 22 for Sun overhead (latitude =0 deg - i.e. equator).
vii) Figure 7 shows position of second axis 22 for latitude = 40 deg.
viii) Figure 8 shows plan view of Figure 6.
ix) Embodiment is particularly suited to small process heating applications.

### Second Tracking Assembly - Second Example

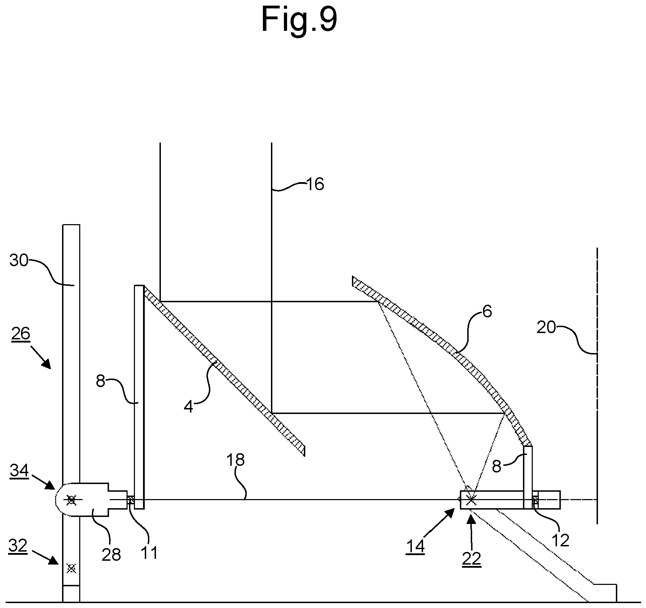

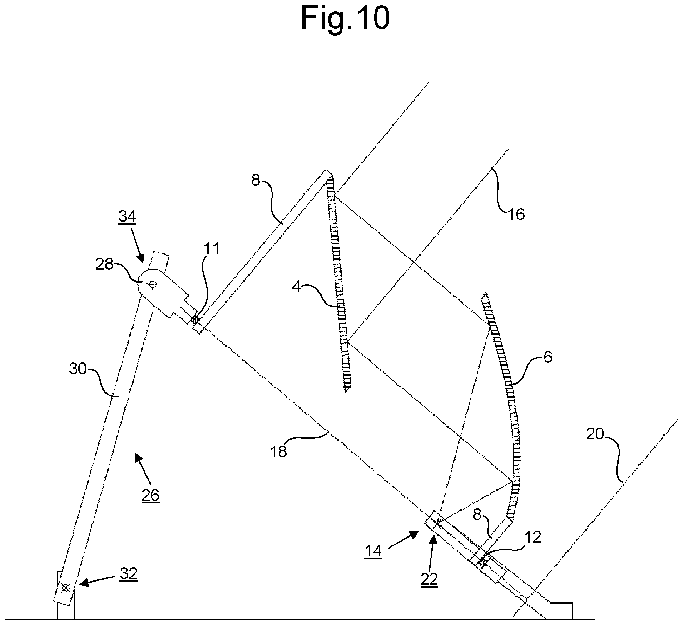

In a second example of a second tracking assembly, as shown in Figures 9 and 10, the second axis 22 is again defined by a gimbal 24 cooperating with a support assembly 26 configured in a similar manner to the embodiment described above with reference to Figures 6-8. However in this embodiment the second reflector 6 is orientated downwards (away from the Sun) so as to produce a point focus 14 underneath the first and second reflectors 4,6. In Figure 9 the rotation about the second axis 22 is adjusted for the Sun directly overhead (latitude =0). The second axis tracking movement is illustrated in Figure 10 where rotation about the second axis 22 has been adjusted for a latitude of 40 deg.

This arrangement is particularly suited to roof top installations as it can be easily mounted on a flat surface. It also has the advantage that the point focus 14 and hence heated area is low down. In a process heating application this would minimise pipe runs etc. It is also well suited to any application that can use evacuated or encapsulated solar absorbers where light incident from above is acceptable.

Features of the embodiment described above with reference to Figures 9-10 may be summarised as follows:
i) Polar tracking arrangement similar to the first example of a second tracking assembly.
ii) Second reflector is orientated to reflect down (away from Sun) as in Figure 3.
iii) Figure 9 shows position of second axis 22 for Sun overhead (latitude =0 deg - i.e. equator)
iv) Figure 10 shows position of second axis 22 for latitude = 40 deg.

### Second Tracking Assembly - Third Example

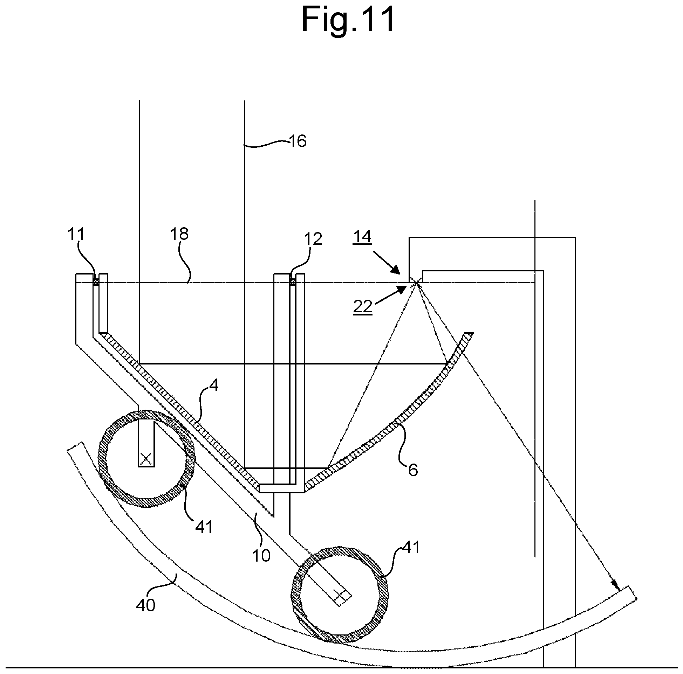

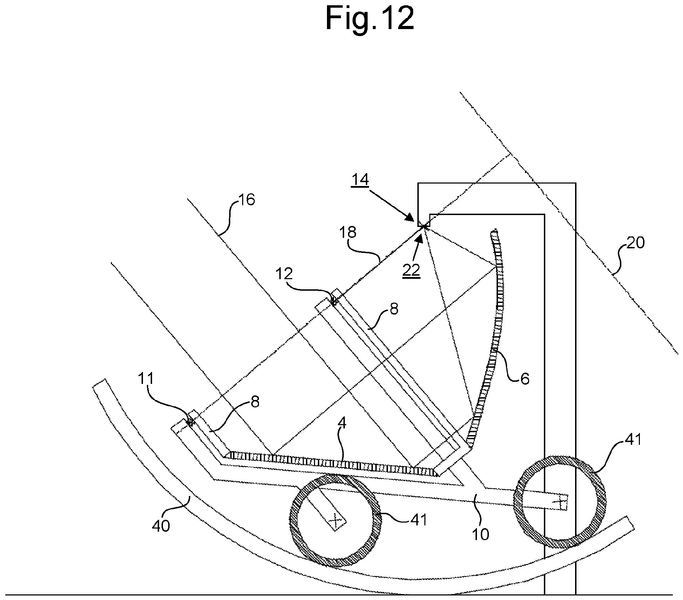

In a third example of a second tracking assembly, as shown in Figures 11 and 12, a polar tracking arrangement is provided as in the first and second examples. However, instead of providing a gimbal 24 to define the rotation about the second axis 22, the first tracking assembly is configured to roll (using wheels 41) along a curved track 40 defining the rotation about the second axis 22. In comparison with the first and second examples of a second tracking assembly, the third example will tend to offer higher rigidity and load capacity. It is suited to larger applications which involve higher masses and which may also require more accurate tracking.

In Figure 11 the rotational position of the reflector assembly about the second axis 22 is adjusted for the Sun directly overhead (latitude = 0 deg.). The second axis tracking movement is illustrated in Figure 12 where the rotation about the second axis 22 has been adjusted for a latitude of 40 deg.

In the embodiment shown the second connector 12 is located between the first and second reflectors 4,6 when viewed along the target direction (as in Figure 4 for example). This has the advantage of freeing up space in the region of the point focus 14.

This embodiment might for example be used for large scale process heating or Stirling engine applications.

Features of the embodiment described above with reference to Figures 11-12 may be summarised as follows:
i) Polar tracking arrangement that uses wheels 41 on a circular track 40 to define the second axis 22.
ii) First axis 18 has a second connector 12 between the first and second reflectors 4,6 when viewed along the target direction.
iii) Second reflector 6 is oriented to reflect light up (towards the Sun). Geometry is same as shown in Figure 4.
iv) Figure 11 shows rotational position around second axis 22 for Sun overhead (latitude =0 deg- i.e. equator).
v) Figure 12 shows rotational position around second axis 22 for latitude = 40 deg.

### Second Tracking Assembly - Fourth Example

In a fourth example of a second tracking assembly, as shown in Figures 13-16, the second tracking assembly is configured to support the first tracking assembly in such a manner that the second axis 22 is vertical. This type of tracking arrangement may be referred to as an azimuthal/elevation type tracking arrangement. This approach is well suited to larger applications which involve higher masses (e.g. larger and heavier reflectors 4,6) and which may also require more accurate tracking. In Figures 13-16 it will be see that second axis tracking is provided by a simple combination of a ball joint 46 together with two supporting wheels 48.

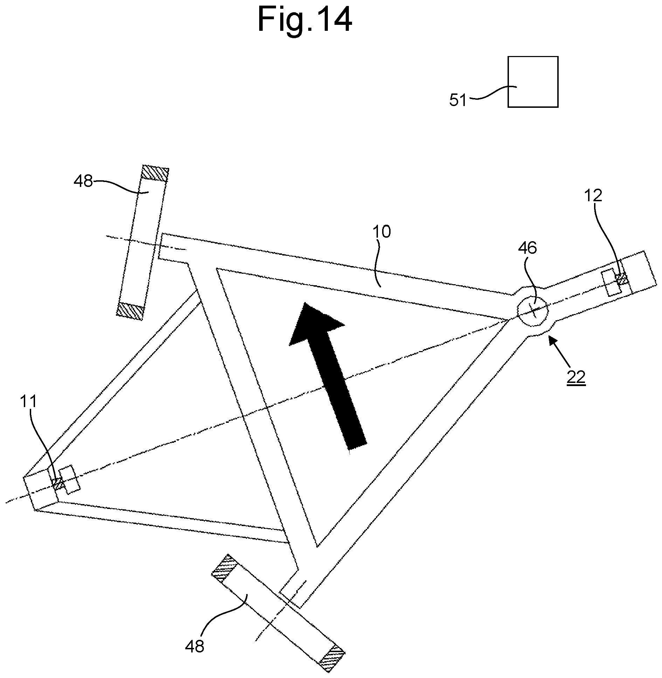

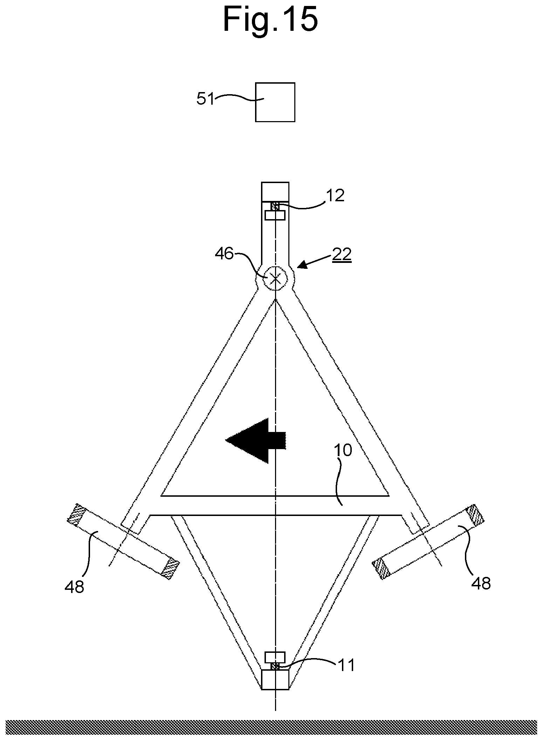

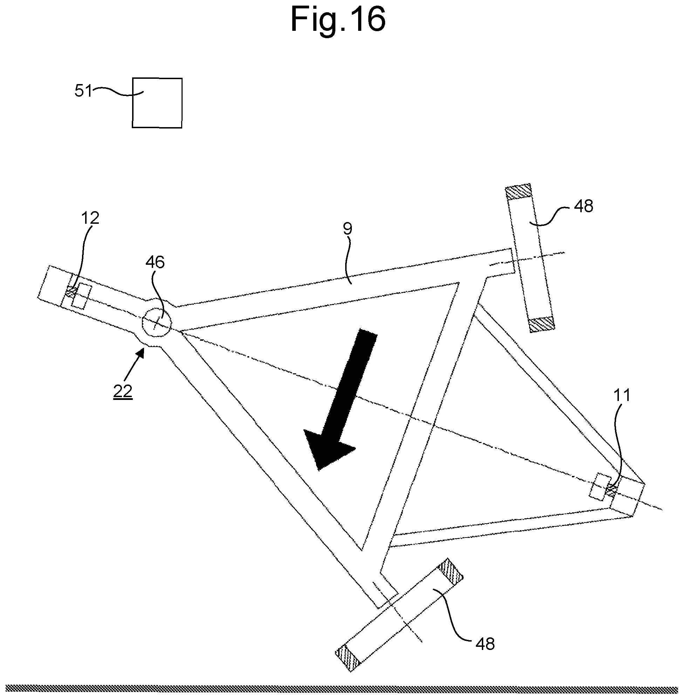

Figures 14, 15 and 16 show a plan view of a first tracking assembly frame 10 (without the reflector assembly for clarity) as the solar concentrator is tracked during a day. In Figure 14 it is dawn and the angle of rotation of the reflector assembly around the first axis 18 is at its lowest elevation to capture the Sun as it begins to rise; the azimuthal angle (set by rotation of the first tracking assembly frame 10 about the second axis 22) is adjusted to direct the concentrator towards the Sun (i.e. so that the target direction is aligned with the position of the Sun). In Figure 15 it is midday and the angle of rotation of the reflector assembly around the first axis 18 is at its highest elevation. In Figure 16 the angle of rotation of the reflector assembly around the first axis 18 is again at its lowest elevation as the Sun is about to disappear. The elevation and azimuthal angles are adjusted (by respective rotations about the first and second axes 18 and 22) throughout to maintain the alignment of the concentrator with the Sun. In Figures 14, 15 and 16, the direction of the thick shaded arrow shows the azimuthal direction of the reflector assembly. The length of the arrow indicates the elevation of the reflector assembly - the shorter arrow at midday indicates its highest elevation

The fourth example of a second tracking assembly is advantageous relative to the third example of a second tracking assembly discussed above in that the wheels 48 need only run on a flat surface. However it does have a larger footprint for the same power. It also requires continual adjustment of both tracking axes 18,22 to maintain accurate alignment. The choice between the two arrangements is therefore quite dependent on the particular application.

Figure 13 also illustrates how this embodiment might be used with a cavity receiver 50, mounting in this example on tower 51. The receiver 50 has a small entrance aperture and this is generally positioned at the point focus 14 of the concentrator. When the Sun is directly overhead, the focal plane of the focus will be aligned with the entrance aperture and the aperture need only be as large as the point focus 14 to collect all the incident radiation. For all other positions of the Sun the focal plane will not be aligned and if the aperture size is unchanged the receiver 50 will not capture all the radiation. To capture all the radiation for the required range of tracking angles there are two options:
i) The aperture/receiver can be rotated so that the focal plane is always aligned with the aperture.
ii) The aperture can be enlarged so that it is big enough to contain the unaligned focus. The more efficient approach is to align the aperture with the plane of the focus. However, this may entail some mechanical complication. If the operating temperature is not too high then it may be simpler to open up the aperture and live with the increased radiation losses.

Features of the embodiment described above with reference to Figures 13-16 may be summarised as follows:
i) Azimuthal/Elevation Tracking arrangement.
ii) Ball joint and wheel on track used to define second tracking axis.
iii) Second tracking axis is perpendicular to ground.
iv) Figure 13 shows a side view of the concentrator at midday.
v) Figures 14, 15 and 16 show plan views and indicate how the azimuthal angle variation is achieved.

### Second Tracking Assembly - Fifth Example

In a fifth example of a second tracking assembly, as shown in Figures 17-20, an azimuthal/elevation design is used in which the azimuthal angle is in a plane perpendicular to the ground rather than being parallel to the ground. The second axis 22 is thus horizontal and aligned in the North-South direction (parallel to lines of longitude). Arrangements of this type may be well suited to situations where the solar concentrator needs to be attached to a wall (e.g. a south facing wall). For example it could be used to provide hot water/steam in small residential systems without using a roof space.

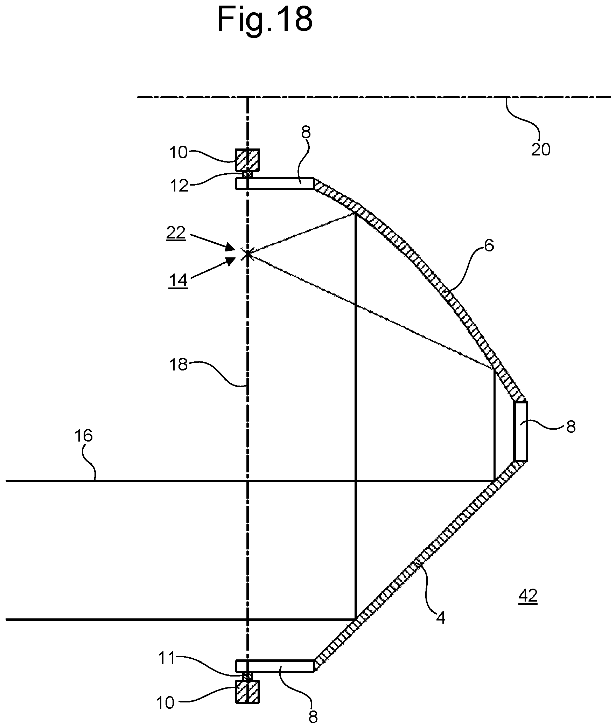

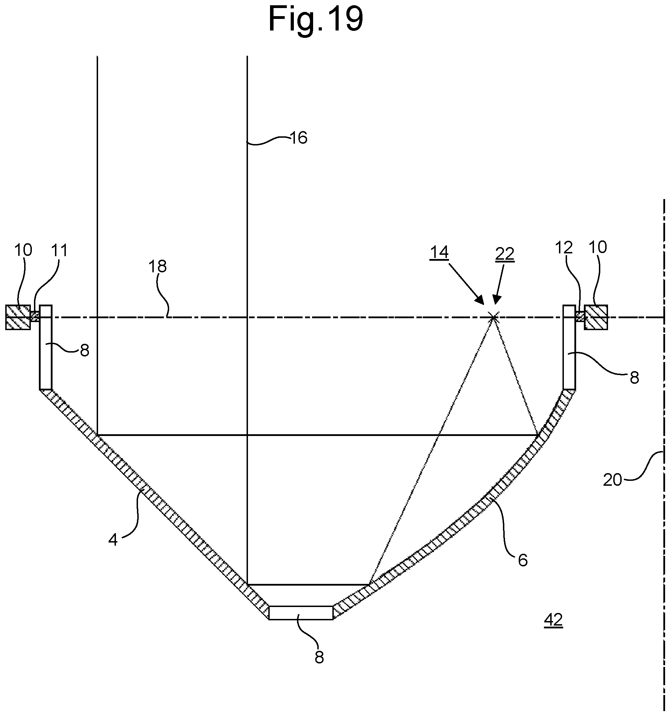

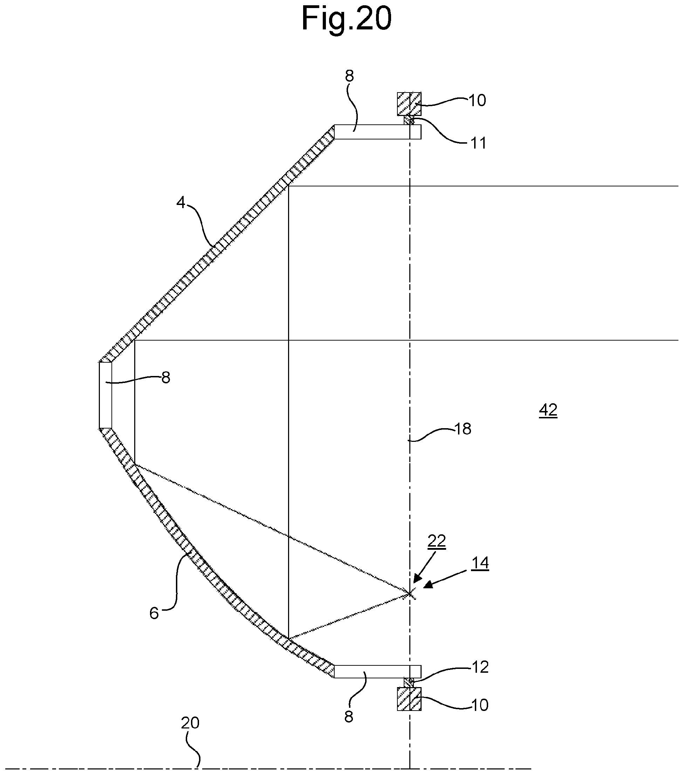

Figure 17 is a side view (along the wall 42) of the concentrator at midday when the latitude is 20 deg. The azimuthal angle of the second axis 22 is set so that first axis 18 is horizontal (parallel with the ground 40). At the same time the reflector assembly is tilted at 20 deg. to the vertical about the first axis 18 so as to be aligned with the Sun. Figures 18, 19 and 20 show views facing the wall 42 as the first tracking assembly is tracked during the day around the second tracking axis. In Figure 18 the reflector assembly is pointed at the horizon as dawn breaks. Figure 19 shows the reflector assembly at midday when the Sun is directly overhead (i.e. for latitude = 0). In Figure 20 the reflector assembly is pointed at the opposite horizon as the Sun is about to disappear at dusk.

Features of the embodiment described above with reference to Figures 17-20 may be summarised as follows:
i) Azimuthal/Elevation Tracking arrangement - the azimuthal angle is in a plane perpendicular to the ground.
ii) Second axis 22 is parallel to ground aligned North-South.
iii) Figure 17 shows a side view of the concentrator at midday for a latitude of 20 deg. The second axis 22 is at right angles to a vertical wall 42.
iv) Figure 18, 19 and 20 show front views looking at the wall 42. They indicate how the second axis tracking varies the vertical azimuthal angle.

In any of the embodiments described herein and in other embodiments a mechanism may be provided for driving rotation of the reflector assembly about the first axis, for driving rotation of the first tracking assembly about the second axis, or both. Various mechanisms that are well known to the skilled person could be used for this purpose. For example a wheel can be attached to the reflector assembly or first tracking assembly and this can then be driven by some form of actuator/control system. For example an electric motor may be used to rotate the reflector assembly or first tracking assembly via a gearbox and drive chain.

## Claims

1. A solar concentrator, comprising:
a reflector assembly comprising first and second reflectors (4,6) fixedly mounted relative to each other, the first and second reflectors (4,6) being configured such that solar radiation incident on the first reflector (4) from a target direction is focussed to a point focus (14) via a first sequence of reflections, the first sequence of reflections including a reflection from the first reflector (4) onto the second reflector (6) and a subsequent reflection from the second reflector (6) onto the point focus (14), the first reflector (4) comprises a reflective surface shaped as a portion of a cone; said solar concentrator **characterized by** further comprising:
a first tracking assembly comprising first and second connectors (11,12) supporting the reflector assembly, wherein
the first and second connectors (11,12) are configured to allow rotation of the reflector assembly about a first axis (18) via pivoting of the reflector assembly at the first and second connectors (11,12);
the first and second connectors (11,12) are both located on the first axis (18) and are spaced apart from each other along the first axis (18);
the solar concentrator further comprises a second tracking assembly, wherein the first tracking assembly is connected to the second tracking assembly in such a way as to be rotatable about a second axis (22) that is perpendicular to the first axis (18); and
the first and second axes (18,22) pass through the point focus (14) such that the point focus (14) remains stationary through a range of angles of rotation of the reflector assembly about the first axis (18) and second axis (22).

2. The solar concentrator of claim 1, wherein the second reflector (6) comprises a reflective surface shaped as a portion of a parabolic trough.

3. The solar concentrator of claim 1 or 2, wherein the cone is defined by a cone axis about which the cone is rotationally symmetric and the first axis (18) intersects the cone axis at 90 degrees.

4. The solar concentrator of any preceding claim, configured such that when solar radiation is incident on the first reflector (4) from the target direction the point focus (14) is located nearer to the Sun than at least most of a portion of the second reflector (6) from which solar radiation is being reflected towards the point focus (14).

5. The solar concentrator of claim 4, wherein:
the reflector assembly further comprises third and fourth reflectors (5,7) fixedly mounted relative to each other, the third and fourth reflectors (5,7) being configured such that solar radiation incident on the third reflector (5) from the target direction is focussed to the point focus (14) via a second sequence of reflections, the second sequence of reflections including a reflection from the third reflector (5) onto the fourth reflector (7) and a subsequent reflection from the fourth reflector (7) onto the point focus (14).

6. The solar concentrator of claim 5, configured such that when solar radiation is incident on the third reflector (5) from the target direction the point focus (14) is located further from the Sun than at least most of a portion of the fourth reflector (7) from which solar radiation is being reflected towards the point focus (14).

7. The solar concentrator of any of claims 1-3, configured such that when solar radiation is incident on the first reflector (4) from the target direction the point focus (14) is located further from the Sun than at least most of a portion of the second reflector (6) from which solar radiation is being reflected towards the point focus (14).

8. The solar concentrator of any of the preceding claims, configured such that, in use, when viewed along the target direction, the first reflector (4) and the second reflector (6) are positioned in between the first and second connectors (11,12) along the first axis (18).

9. The solar concentrator of any of the preceding claims, wherein the reflector assembly is configured such that the solar radiation is reflected off the first or, where present, the third reflector (4,5), in a direction perpendicular to the target direction when the solar radiation is incident on the first reflector (4) or, where present, the third reflector (5) from the target direction.

10. The solar concentrator of claim 1, wherein the second tracking assembly is configured to support the first tracking assembly in such a manner that the second axis (22) is horizontal.

11. The solar concentrator of claim 10, wherein:
the second tracking assembly comprises a gimbal (24) connected to one of the first and second connectors (11,12) and a support assembly (26) connected to the other of the first and second connectors (12,11);
the gimbal (24) is configured to provide the rotation about the second axis (22); and
the support assembly (26) comprises a carrier (28) mounted so as to be linearly translatable along a linear track (30), the linear track (30) being configured to pivot about an axis parallel to the second axis (22), wherein the other of the first and second connectors (12,11) is pivotably connected to the carrier (28) such as to allow rotation about an axis through the carrier (28) that is parallel to the second axis (22).

12. The solar concentrator of claim 1, wherein the second tracking assembly is configured to support the first tracking assembly in such a manner that the second axis (22) is vertical.

13. The solar concentrator of claim 10 or 12, wherein:
the first tracking assembly is configured to be rolled along a curved track defining the rotation about the second axis (22).

14. A method of installing a solar concentrator according to claim 10, comprising positioning the second tracking assembly such that the second axis (22) is aligned parallel to a line of latitude or a line of longitude.

## Patentansprüche

1. Solarkonzentrator, umfassend:
eine Reflektoranordnung, die einen ersten und zweiten Reflektor (4, 6) umfasst, die fest in Bezug aufeinander montiert sind, wobei der erste und zweite Reflektor (4, 6) so konfiguriert sind, dass Sonnenstrahlung, die aus einer Zielrichtung auf den ersten Reflektor (4) einfällt, über eine erste Folge von Reflexionen auf einen Punktfokus (14) fokussiert wird, wobei die erste Folge von Reflexionen eine Reflexion von dem ersten Reflektor (4) auf den zweiten Reflektor (6) und eine nachfolgende Reflexion von dem zweiten Reflektor (6) auf den Punktfokus (14) beinhaltet, wobei der erste Reflektor (4) eine reflektierende Oberfläche umfasst, die als ein Abschnitt eines Kegels geformt ist; wobei der Solarkonzentrator **dadurch gekennzeichnet ist, dass** er ferner Folgendes umfasst:
eine erste Nachführanordnung, die einen ersten und zweiten Verbinder (11, 12) umfasst, die die Reflektoranordnung tragen, wobei
der erste und zweite Verbinder (11, 12) konfiguriert sind, um eine Drehung der Reflektoranordnung um eine erste Achse (18) durch Schwenken der Reflektoranordnung an dem ersten und zweiten Verbinder (11, 12) zu ermöglichen;
sich der erste und der zweite Verbinder (11, 12) beide auf der ersten Achse (18) befinden und entlang der ersten Achse (18) voneinander beabstandet sind;
der Solarkonzentrator ferner eine zweite Nachführanordnung umfasst, wobei die erste Nachführanordnung mit der zweiten Nachführanordnung auf eine Weise verbunden ist, dass sie um eine zweite Achse (22) drehbar ist, die senkrecht zur ersten Achse (18) ist; und
die erste und zweite Achse (18, 22) durch den Punktfokus (14) verlaufen, sodass der Punktfokus (14) über einen Bereich von Drehwinkeln der Reflektoranordnung um die erste Achse (18) und die zweite Achse (22) stationär bleibt.

2. Solarkonzentrator nach Anspruch 1, wobei der zweite Reflektor (6) eine reflektierende Oberfläche umfasst, die als ein Abschnitt einer Parabolrinne geformt ist.

3. Solarkonzentrator nach Anspruch 1 oder 2, wobei der Konus durch eine Konusachse definiert ist, um die der Konus rotationssymmetrisch ist und die erste Achse (18) die Konusachse bei 90 Grad schneidet.

4. Solarkonzentrator nach einem vorhergehenden Anspruch, der konfiguriert ist, sodass, wenn Sonneneinstrahlung aus der Zielrichtung auf den ersten Reflektor (4) einfällt, sich der Punktfokus (14) näher an der Sonne befindet als mindestens das meiste eines Teils des zweiten Reflektors (6), von dem Sonneneinstrahlung zu dem Punktfokus (14) reflektiert wird.

5. Solarkonzentrator nach Anspruch 4, wobei:
die Reflektoranordnung ferner einen dritten und vierten Reflektor (5, 7) umfasst, die fest in Bezug aufeinander montiert sind, wobei der dritte und vierte Reflektor (5, 7) konfiguriert sind, sodass die aus der Zielrichtung auf den dritten Reflektor (5) einfallende Sonnenstrahlung über eine zweite Folge von Reflexionen auf den Punktfokus (14) fokussiert wird, wobei die zweite Folge von Reflexionen eine Reflexion von dem dritten Reflektor (5) auf den vierten Reflektor (7) und eine nachfolgende Reflexion von dem vierten Reflektor (7) auf den Punktfokus (14) beinhaltet.

6. Solarkonzentrator nach Anspruch 5, der konfiguriert ist, sodass, wenn Sonneneinstrahlung aus der Zielrichtung auf den dritten Reflektor (5) einfällt, sich der Punktfokus (14) weiter von der Sonne entfernt befindet als mindestens das meiste eines Teils des vierten Reflektors (7), von dem Sonneneinstrahlung zu dem Punktfokus (14) reflektiert wird.

7. Solarkonzentrator nach einem der Ansprüche 1-3, der konfiguriert ist, sodass, wenn Sonneneinstrahlung aus der Zielrichtung auf den ersten Reflektor (4) einfällt, sich der Punktfokus (14) weiter von der Sonne entfernt befindet als mindestens das meiste eines Teils des zweiten Reflektors (6), von dem Sonneneinstrahlung zu dem Punktfokus (14) reflektiert wird.

8. Solarkonzentrator nach einem der vorhergehenden Ansprüche, der konfiguriert ist, sodass, wenn er in der Verwendung entlang der Zielrichtung betrachtet wird, der erste Reflektor (4) und der zweite Reflektor (6) zwischen dem ersten und zweiten Verbinder (11, 12) entlang der ersten Achse (18) positioniert sind.

9. Solarkonzentrator nach einem der vorhergehenden Ansprüche, wobei die Reflektoranordnung konfiguriert ist, sodass die Sonnenstrahlung von dem ersten oder, wo vorhanden, von dem dritten Reflektor (4, 5) in einer Richtung senkrecht zu der Zielrichtung reflektiert wird, wenn die Sonnenstrahlung aus der Zielrichtung auf den ersten Reflektor (4) oder, wo vorhanden, den dritten Reflektor (5) einfällt.

10. Solarkonzentrator nach Anspruch 1, wobei die zweite Nachführanordnung konfiguriert ist, um die erste Nachführanordnung auf eine Weise zu tragen, dass die zweite Achse (22) horizontal ist.

11. Solarkonzentrator nach Anspruch 10, wobei:
die zweite Nachführanordnung einen Tragbügel (24) umfasst, der mit einem von dem ersten und zweiten Verbinder (11, 12) und einer Stützanordnung (26) verbunden ist, die mit dem anderen von dem ersten und zweiten Verbinder (12, 11) verbunden ist;
der Tragbügel (24) konfiguriert ist, um die Drehung um die zweite Achse (22) bereitzustellen; und die Stützanordnung (26) einen Träger (28) umfasst, der montiert ist, um entlang einer Linearführung (30) linear verschiebbar zu sein, wobei die Linearführung (30) konfiguriert ist, um um eine Achse parallel zur zweiten Achse (22) zu schwenken, wobei der andere von dem ersten und zweiten Verbinder (12, 11) schwenkbar mit dem Träger (28) verbunden ist, um eine Drehung um eine Achse durch den Träger (28) zu ermöglichen, die parallel zu der zweiten Achse (22) ist.

12. Solarkonzentrator nach Anspruch 1, wobei die zweite Nachführanordnung konfiguriert ist, um die erste Nachführanordnung auf eine Weise zu tragen, dass die zweite Achse (22) vertikal ist.

13. Solarkonzentrator nach Anspruch 10 oder 12, wobei:
die erste Nachführanordnung konfiguriert ist, um entlang einer gekrümmten Bahn gerollt zu werden, die die Drehung um die zweite Achse (22) definiert.

14. Verfahren zum Installieren eines Solarkonzentrators nach Anspruch 10, umfassend ein positionieren der zweiten Nachführanordnung, sodass die zweite Achse (22) parallel zu einer Breitengradlinie oder Längengradlinie ausgerichtet ist.

## Revendications

1. Concentrateur solaire, comprenant :
un ensemble réflecteur comprenant des premier et deuxième réflecteurs (4, 6) montés fixement l'un par rapport à l'autre, les premier et deuxième réflecteurs (4, 6) étant conçus de sorte qu'un rayonnement solaire incident sur le premier réflecteur (4) à partir d'une direction de cible soit focalisé vers un point focal (14) par l'intermédiaire d'une première séquence de réflexions, la première séquence de réflexions comprenant une réflexion du premier réflecteur (4) au deuxième réflecteur (6) et une réflexion suivante du deuxième réflecteur (6) au point focal (14), le premier réflecteur (4) comprenant une surface réfléchissante mise sous la forme d'une partie de cône ; ledit concentrateur solaire étant **caractérisé en ce qu'**il comprend en outre :
un premier ensemble de suivi comprenant des premier et deuxième connecteurs (11, 12) supportant l'ensemble réflecteur,
les premier et deuxième connecteurs (11, 12) étant conçus pour permettre une rotation de l'ensemble réflecteur autour d'un premier axe (18) par un pivotement de l'ensemble réflecteur au niveau des premier et deuxième connecteurs (11, 12) ;
les premier et deuxième connecteurs (11, 12) étant tous deux situés sur le premier axe (18) et étant espacés l'un de l'autre le long du premier axe (18) ;
le concentrateur solaire comprenant en outre un deuxième ensemble de suivi, le premier ensemble de suivi étant raccordé au deuxième ensemble de suivi de façon à être capable d'une rotation autour d'un deuxième axe (22) qui est perpendiculaire au premier axe (18) ; et
les premier et deuxième axes (18, 22) passant par le point focal (14) de sorte que le point focal (14) reste stationnaire sur une plage d'angles de rotations de l'ensemble de réflecteur autour du premier axe (18) et du deuxième axe (22).

2. Concentrateur solaire de la revendication 1, dans lequel le deuxième réflecteur (6) comprend une surface réfléchissante mise sous la forme d'un disque parabolique.

3. Concentrateur solaire de la revendication 1 ou 2, dans lequel le cône est défini par un axe de cône autour duquel le cône est symétrique en rotation et le premier axe (18) coupe l'axe de cône à 90 degrés.

4. Concentrateur solaire de l'une quelconque des revendications précédentes, conçu de sorte que lorsqu'un rayonnement solaire est incident sur le premier réflecteur (4) à partir de la direction de cible, le point focal (14) soit situé plus près du soleil qu'au moins la majorité d'une partie du deuxième réflecteur (6) depuis lequel le rayonnement solaire est réfléchi vers le point focal (14).

5. Concentrateur solaire de la revendication 4, dans lequel :
l'ensemble réflecteur comprend en outre des troisième et quatrième réflecteurs (5, 7) montés fixement l'un par rapport à l'autre, les troisième et quatrième réflecteurs (5, 7) étant conçus de sorte qu'un rayonnement solaire incident sur le troisième réflecteur (5) à partir d'une direction de cible soit focalisé vers un point focal (14) par l'intermédiaire d'une deuxième séquence de réflexions, la deuxième séquence de réflexions comprenant une réflexion du troisième réflecteur (5) au quatrième réflecteur (7) et une réflexion suivante du quatrième réflecteur (7) au point focal (14).

6. Concentrateur solaire de la revendication 5, conçu de sorte que lorsqu'un rayonnement solaire est incident sur le troisième réflecteur (5) à partir de la direction de cible, le point focal (14) soit situé plus loin du soleil qu'au moins la majorité d'une partie du quatrième réflecteur (7) depuis lequel le rayonnement solaire est réfléchi vers le point focal (14).

7. Concentrateur solaire de l'une quelconque des revendications 1 à 3, conçu de sorte que lorsqu'un rayonnement solaire est incident sur le premier réflecteur (4) à partir de la direction de cible, le point focal (14) soit situé plus loin du soleil qu'au moins la majorité d'une partie du deuxième réflecteur (6) depuis lequel le rayonnement solaire est réfléchi vers le point focal (14).

8. Concentrateur solaire de l'une quelconque des revendications précédentes, conçu de sorte qu'en utilisation, vu le long de la direction de cible, le premier réflecteur (4) et le deuxième réflecteur (6) soient positionnés entre le premier et deuxième connecteurs (11, 12) le long du premier axe (18).

9. Concentrateur solaire de l'une quelconque des revendications précédentes, dans lequel l'ensemble réflecteur est conçu de sorte que le rayonnement solaire soit réfléchi depuis le premier réflecteur (4) ou, le cas échéant, le troisième réflecteur (5), dans une direction perpendiculaire à la direction de cible lorsque le rayonnement solaire est incident sur le premier réflecteur (4) ou, le cas échéant, le troisième réflecteur (5) à partir de la direction cible.

10. Concentrateur solaire de la revendication 1, dans lequel le deuxième ensemble de suivi est conçu pour supporter le premier ensemble de suivi de telle sorte que le deuxième axe (22) soit horizontal.

11. Concentrateur solaire de la revendication 10, dans lequel :
le deuxième ensemble de suivi comprend un cardan (24) raccordé à l'un des premier et deuxième connecteurs (11, 12) et un ensemble de support (26) raccordé à l'autre des premier et deuxième connecteurs (12, 11) ;
le cardan (24) est conçu pour assurer la rotation autour du deuxième axe (22) ; et
l'ensemble de support (26) comprend un support (28) monté de façon à être capable d'une translation linéaire le long d'une piste linéaire (30), la piste linéaire (30) étant conçue pour pivoter autour d'un axe parallèle au deuxième axe (22), l'autre des premier et deuxième connecteurs (12, 11) étant raccordé de manière pivotante au support (28) de sorte à permettre une rotation autour d'un axe à travers le support (28) qui est parallèle au deuxième axe (22).

12. Concentrateur solaire de la revendication 1, dans lequel le deuxième ensemble de suivi est conçu pour supporter le premier ensemble de suivi de telle sorte que le deuxième axe (22) soit vertical.

13. Concentrateur solaire de la revendication 10 ou 12, dans lequel :
le premier ensemble de suivi est conçu pour être enroulé le long d'une piste incurvée définissant la rotation autour du deuxième axe (22).

14. Procédé d'installation d'un concentrateur solaire selon la revendication 10, comprenant le positionnement du deuxième ensemble de suivi de sorte que le deuxième axe (22) soit aligné parallèlement à une ligne de latitude ou une ligne de longitude.
